# EUROPÄISCHE PATENTSCHRIFT

(11) **EP 0 582 591 B1**
(45) Veröffentlichungstag und Bekanntmachung des Hinweises auf die Patenterteilung: **09.08.1995**
(21) Anmeldenummer: 92908832.6
(22) Anmeldetag: 22.04.1992
(51) Int. Cl.: G06K 7/06

(54) **KARTENLESER MIT EINEM IN EINER AUFNAHME ENTGEGEN FEDERKRAFT VERSCHIEBBAREN SCHLITTEN**
CARD READER WITH CARRIAGE MOVABLE IN A RECEPTACLE AGAINST AN ELASTIC FORCE
LECTEUR DE CARTE AVEC CHARIOT MOBILE DANS UN LOGEMENT A L'ENCONTRE D'UNE FORCE ELASTIQUE

(30) Priorität: 30.04.1991 DE 9105357 U
(43) Veröffentlichungstag der Anmeldung: 16.02.1994
(73) Patentinhaber: SIEMENS AKTIENGESELLSCHAFT, 80333 München (DE)
(72) Erfinder: DAUER, Hermann. Dipl.-ing. (FH), D-85551 Kirchheim (DE)
(86) Internationale Anmeldenummer: DE9200324
(87) Internationale Veröffentlichungsnummer: WO9220035

(56) Entgegenhaltungen:
- DE-A- 3 442 397
- US-A- 4 575 703
- US-A- 4 926 032

## Beschreibung

Die vorliegende Erfindung beinhaltet einen Kartenleser mit einem in einer Aufnahme entgegen Federkraft verschiebbaren und die Karte aufnehmenden Schlitten, der Federn zur Kontaktierung des auf der Karte befindlichen Chips sowie eine Vorrichtung zum Ein- und Ausschalten der Lese- und Auswerteeinrichtung trägt, wobei die Steuerung dieser beiden Einrichtungen durch einen senkrecht zur Einführungsrichtung der Karte im Schlitten angeordneten Schieber erfolgt, der von der Aufnahme angeordneten Steuerflächen betätigt wird, und bei dem weiterhin ein an der Karte anliegendes den Ausstoß der Karte verzögerndes Federelement vorgesehen ist.

Ein derartiger Kartenleser ist z. B. durch die DE 34 42 397 Al bekannt. Bei diesem Kartenleser wird eine Kontaktierung der Chipkarte über zwei Wege vorgenommen, nämlich durch Längsverschiebung des Schlittens sowie durch die Längsbewegung des Schiebers. Dadurch wird ohne Erhöhung des Verschiebeweges des die Chipkarte aufnehmenden Schlittens der wirksame Weg zur Steuerung der Kontaktfedern beträchtlich erhöht, so daß bei höheren Kontaktkräften lediglich eine geringere Kraft zum Einschieben erforderlich ist. Durch die über zwei Wege angesteuerten Kontaktfedern werden diese somit nicht schlagartig wie bei bekannten Kontaktvorrichtungen in ihre Kontaktlage gebracht, so daß die Lebensdauer von Chipkarte und Kontaktfedern beträchtlich verlängert wird. Eine Verriegelung dies Schlittens in der Lesestellung kann z. B. über eine elektromagnetische, über einen Kontakt betriebene Vorrichtung vorgenommen werden.

Es hat sich nun insbesondere bei horizontaler Einbaulage des Kartenlesers und damit auch des Schlittens als nachteilig herausgestellt, daß nach Beendigung des Lesevorgangs und der damit erfolgenden Freigabe des Schlittens dieser durch die Kraft der vorgespannten Feder oder Federn schlagartig in die Ausgangslage zurückgeführt wird, wobei die Karte selbst in unerwünschter Weise beschleunigt aus der im Schlitten befindlichen Einführungsöffnung für die Karte in Richtung des Benutzers ausgestoßen wird.

Zur Vermeidung dieses Nachteils ist es bereits bekannt (G 89 08 801), im Schlitten in dem den Kontaktfedern gegenüberliegenden Bereich der Aufnahme für die Karte einen in Richtung der Einführungsöffnung für die Karte weisenden federnden und an der Karte anliegenden Steg vorzusehen. Bei dieser Anordnung muß es jedoch als nachteilig erachtet werden, daß bei häufigerer Benutzung des Kartenlesers der mittig im Schlitten angeordnete Steg den auf der Karte angeordneten Chip zu stark an die an ihm anliegenden Kontakte drückt und somit zu einem unerwünschten vorzeitigen Verschleiß der Chipkarte sowie der Kontaktfedern führt.

Aus US-A-4 575 703 ist ein Kartenleser bekannt, bei dem ein an der Karte anliegendes, den Ausstoß der Karte verzögerndes Federelement vorgesehen ist, das Federelement ist form- und kraftschlüssig am Gehäuse des Kartenlesers im Bereich einer Einführungsöffnung befestigt und ragt mit einem an der Karte zur Anlage gelangenden Roller in die Einführungsöffnung für die Karte hinein.

Der vorliegenden Erfindung liegt daher die Aufgabe zugrunde, eine Bremsvorrichtung für die Karte aufzuzeigen, mit der die Karte ohne die zuvor erwähnten unerwünschten Nebenwirkungen nach Beendigung des Lesevorgangs gebremst in die Ausgangslage zurückgeführt wird.

Diese Aufgabe wird dadurch gelöst, daß das Federelement form- und kraftschlüssig am Gehäuse des Kartenlesers im Bereich einer Einführungsöffnung befestigt ist und mit einem beim Ausstoßvorgang an der Karte zur Anlage gelangenden Federlappen in die Einführungsöffnung für die Karte hineinragt.

Bei dieser erfindungsgemäßen Anordnung wird das den Ausstoß der Karte verzögernde Federelement nicht mehr im beweglichen sondern im feststehenden Teil des Kartenlesers vorgesehen. Dies hat einmal den Vorteil, daß die Karte nicht bereits in dem durch Federkraft zurückgeführten Schlitten, sondern erst im Bereich der Einführungsöffnung für die Karte abgebremst wird. Zum anderen kann das Federelement als einzelnes Bauteil hergestellt und nachträglich in bereits vorhandene Kartenleser eingebaut werden. Dabei drückt der in die Einführungsöffnung hineinragende und beim Ausstoßvorgang an der Karte zur Anlage gelangende Bereich des Federlappens mit einer vorgegebenen Kraft (15 bis 20 cN) auf die Karte und bewirkt somit die gewünschte Verzögerung der Karte beim Ausstoßvorgang.

Ein derartiges Federelement kann z. B. im wesentlichen aus einem der Verbindung mit dem Gehäuse des Kartenlesers dienenden Befestigungsbereich und einem senkrecht dazu verlaufenden und den Federlappen tragenden Bereich bestehen. Dabei kann der Befestigungsbereich des Federelementes durch einen freigeschnittenen Steg sowie zwei räumlich durch einen Schlitz getrennte und winklig aus der Ebene des Befestigungsbereiches abgebogenen Einstecklappen gebildet sein, wobei zwischen den Einstecklappen ein mehrfach abgewinkelter freigeschnittener Rasthaken vorgesehen ist. Dieser so gestaltete Befestigungsbereich des Federelementes kann z. B. in eine schlitzartige Aufnahme im Randbereich des Kartenlesergehäuses eingesteckt werden, wobei in die schlitzartige Ausnehmung ein Gehäusesteg hineinragt, der in den zwischen dem Steg und den die Einstecklappen und den Rasthaken angeordneten Schlitz des Befestigungsbereiches eingreift. Durch das Eingreifen des Gehäusesteges in den genannten Schlitz am Federelement wird zunächst eine Fixierung des Federelementes in dessen Längsrichtung erreicht. Eine endgültige Lagesicherung des Federelementes erfolgt durch den Rasthaken, der eine Wandung des Kartenlesers untergreift, so daß das Federelement gegen ein unerwünschtes Herausziehen senkrecht zu dessen Längsrichtung gesichert ist.

Um Fertigungstoleranzen bei der Herstellung der schlitzartigen Aufnahme am Gehäuse des Kartenlesers ausgleichen zu können, kann gemäß einer Weiterbildung der Erfindung eine im Befesti gungsbereich in Fluchtlinie mit dem Rasthaken und ihm gegenüberliegende Durchdrückung vorgesehen sein, die in Verbindung mit den abgebogenen, nachgebenden Einstecklappen einen Ausgleich bewirkt.

Wie bereits zuvor erwähnt, kann der in die Einführungsöffnung hineinragende Federlappen in seinem im Randbereich der Einführungsöffnung an der Karte zur Anlage gelangenden Bereich ballig gestaltet sein, so daß eine linienförmige Anlage des als Bremselement wirkenden Teils des Federelementes zustandekommt. Dieser Bereich des Federlappens kann z. B. so ausgelegt werden, daß er mit der bereits erwähnten Federkraft von 15 bis 20 cN auf den Randbereich der Karte drückt. Eine derartig dimensionierte Andruckkraft reicht aus, um die Karte beim Vorgang des Ausstoßens soweit abzubremsen, daß sie vom Benutzer des Kartenlesers bequem aus diesem entnommen werden kann.

Die Erfindung soll im folgenden anhand eines Ausführungsbeispiels näher erläutert werden.

Es zeigt
Figur 1 das Federelement in einer perspektivischen Ansicht,
Figur 2 einen Teil des Kartenlesers mit eingebautem Federelement in einer perspektivischen Ansicht,
Figur 3 die Verrastung des Federelementes im Gehäuse des Kartenlesers in einer teilweise geschnittenen Seitenansicht,
Figur 4 die Anordnung des Federelementes im Gehäuse des Kartenlesers in einer Ansicht von oben,
Figur 5 den an der Karte im Einführungsbereich anliegenden Federlappen des Federelementes in einer geschnittenen Seitenansicht,
Figur 6 den an der Karte im Einführungsbereich anliegenden Federlappen des Federelementes in einer Frontansicht.

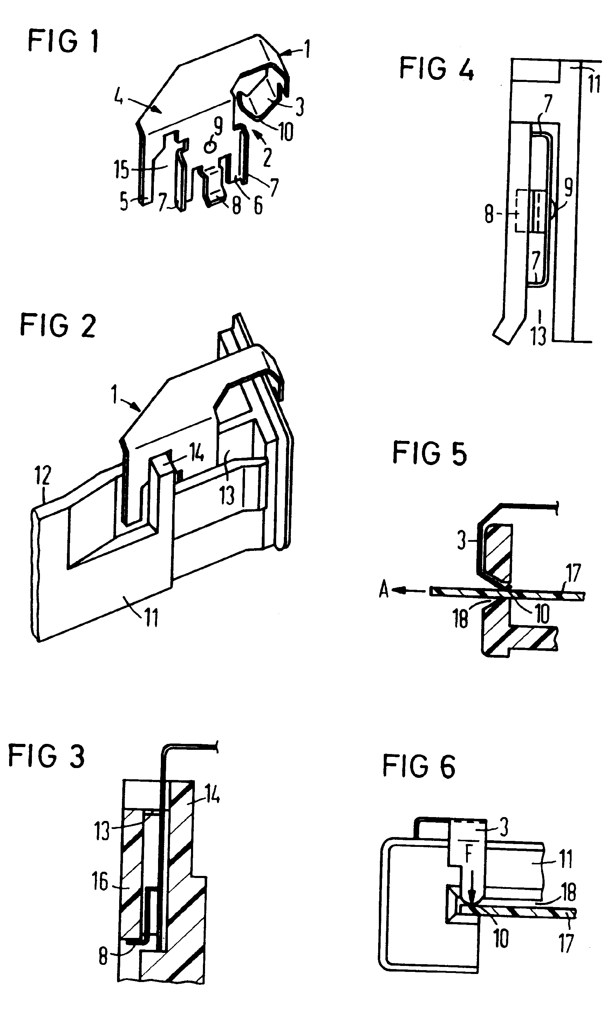

Das in Figur 1 dargestellte Federelement 1 besteht im wesentlichen aus einem der Verbindung mit dem Gehäuse des Kartenlesers dienenden Befestigungsbereich 2 sowie einem zu diesem Befestigungsbereich 2 senkrecht verlaufenden und einen mehrfach abgebogenen Federlappen 3 tragenden Bereich 4. Der Befestigungsbereich 2 weist einen freigeschnittenen Steg 5 sowie einen in der Ebene dieses Steges 5 befindlichen, der Führung und Verrastung des Federelementes in einer schlitzartigen Aufnahme des Kartenlesergehäuses dienenden Ansatz 6 auf. Dieser Ansatz 6 wird von den winklig zu der genannten Ebene abgebogenen Einstecklappen 7 begrenzt, wobei die Länge dieser Einstecklappen 7 etwas geringer ist als die Breite der erwähnten schlitzartigen Aufnahme. Weiterhin besitzt der Ansatz 6 einen freigeschnittenen, mehrfach abgekröpften Rasthaken 8, auf dessen Funktion später eingegangen werden soll. In der Fluchtlinie zu diesem Rasthaken 8 liegend ist eine kugelförmige Durchdrückung 9 angeordnet, die von den freien Enden der Einstecklappen 7 wegweisend vorgesehen ist.

Der Bereich 4 weist den mehrfach zur Einführungsöffnung im Kartenleser abgebogenen Federlappen 3 auf, dessen an der Karte anliegender Bereich 10 ballig gestaltet ist, um eine möglichst geringe Auflage und Reibfläche an der Karte zu erreichen.

In Figur 2 ist die Befestigung des Federelementes 1 am feststehenden Gehäuse 11 des Kartenlesers 12 dargestellt. Im Randbereich des Kartenlesers 12 ist eine schlitzartige Ausnehmung 13 vorgesehen, die von einer Seite frei zugänglich ist und zu diesem Ende hin keilförmig ausläuft. An der Außenwandung des Gehäuses 11 ist ein Gehäusesteg 14 angeordnet. Dieser Gehäusesteg 14 greift in einen Schlitz 15 des Federelementes im befestigten Zustand ein, wobei der Schlitz von dem Steg 5 und dem Ansatz 6 begrenzt wird. Im eingebauten Zustand des Federelementes 1 wird dadurch eine Fixierung in dessen Längsrichtung (Einschub- oder Ausstoßrichtung der Karte) erreicht.

Wie aus der Figur 3 ersichtlich ist, erfolgt die endgültige form- und kraftschlüssige Verbindung des Federelementes 1 mit dem Gehäuse 11 des Kartenlesers 12 durch den Rasthaken 8, der eine Wandung 16 des Gehäuses 11 untergreift und somit das Federelement auch senkrecht zu dessen Längsrichtung sichert.

Aus der Figur 4 kann ersehen werden, daß Toleranzen bei der Herstellung der schlitzartigen Ausnehmung 13 im Gehäuse 11 durch die kugelförmigen Durchdrückung 9 in Verbindung mit den nachgebenden federnden Einstecklappen 7 ausgeglichen werden können, so daß stets ein sicherer und fester Sitz des Federelementes 1 in der schlitzartigen Ausnehmung 13 gewährleistet ist.

In den Figuren 5 und 6 ist die Anlage des Federlappens 3 mit seinem ballig geprägten Bereich 10 an der Karte 17 dargestellt. Dieser ballige Bereich 10 des Federlappens liegt im Randbereich der Einführungsöffnung 18 an der Karte 17 an und drückt mit der Federkraft F auf den Randbereich der Karte (Figur 6).

Die in einem entgegen Federkraft in dem Gehäuse geführten Schlitten (nicht dargestellt) eingebrachte Karte 17 wird nach Beendigung einer Dienstleistung und der damit erfolgenden Freigabe des Schlittens durch die Feder oder Federn normalerweise schlagartig (Pfeilrichtung A in Figur 5) in die Ausgangslage zurückgeführt, wobei die Karte 17 in unerwünschter Weise beschleunigt aus der im Schlitten befindlichen Einführungsöffnung 18 für die Karte in Richtung des Benutzers ausgestoßen wird. Um eine gebremste Rückführung der Karte in die Ausgangslage zu erreichen, drückt das Federelement 1 mit seinem ballig gestalteten Bereich 10 auf den Randbereich der Karte 17.

## Patentansprüche

1. Kartenleser (12) mit einem in einer Aufnahme entgegen Federkraft verschiebbaren und die Karte (17) aufnehmenden Schlitten, der Federn zur Kontaktierung des auf der Karte (17) befindlichen Chips sowie eine Vorrichtung zum Ein- und Ausschalten der Lese- und Auswerteeinrichtung trägt, wobei die Steuerung dieser beiden Einrichtungen durch einen senkrecht zur Einführungsrichtung der Karte (17) im Schlitten angeordneten Schieber erfolgt, der von in der Aufnahme angeordneten Steuerflächen betätigt wird, und bei dem weiterhin ein an der Karte (17) anliegendes, den Ausstoß der Karte (17) verzögerndes Federelement (1) vorgesehen ist, **dadurch gekennzeichnet,** daß das Federelement (1) form- und kraftschlüssig am Gehäuse (11) des Kartenlesers (12) im Bereich einer Einführungsöffnung (18) befestigt ist und mit einem beim Ausstoßvorgang an der Karte (17) zur Anlage gelangenden Federlappen (3) in die Einführungsöffnung (18) für die Karte (17) hineinragt.

2. Kartenleser nach Anspruch 1, **dadurch gekennzeichnet,** daß das Federelement (3) im wesentlichen aus einem der Verbindung mit dem Gehäuse (11) des Kartenlesers (12) dienenden Befestigungsbereich (2) und einem senkrecht dazu angeordneten und den Federlappen (3) tragenden Bereich (4) besteht.

3. Kartenleser nach Anspruch 2, **dadurch gekennzeichnet**, daß der Befestigungsbereich (2) durch einen freigeschnittenen Steg (5) sowie zwei räumlich durch einen Schlitz (15) getrennten und winklig aus der Ebene des Befestigungsbereiches (2) abgebogenen Einstecklappen (7) gebildet ist, wobei zwischen den Einstecklappen (7) ein mehrfach abgewinkelter, freigeschnittener Rasthaken (8) vorgesehen ist.

4. Kartenleser nach Anspruch 1, **dadurch gekennzeichnet,** daß das Gehäuse (11) des Kartenlesers (12) eine schlitzartige Ausnehmung (13) für den Befestigungsbereich (2) des Federelementes (1) aufweist, wobei in die schlitzartige Ausnehmung (13) ein Gehäusesteg (14) hineinragt, der in den zwischen dem Steg (5) und den die Einstecklappen (7) und den Rasthaken (8) angeordneten Schlitz (15) des Befestigungsbereiches (2) eingreift.

5. Kartenleser nach Anspruch 3, **dadurch gekennzeichnet,** daß der Rasthaken (8) eine Wandung (16) des Kartenlesers ((12) untergreift.

6. Kartenleser nach Anspruch 2 und 3, **dadurch gekennzeichnet,** daß an dem Befestigungsbereich (2) in Fluchtlinie mit dem Rasthaken und den freien Enden der Einstecklappen (7) gegenüberliegend eine Durchdrückung (9) vorgesehen ist.

7. Kartenleser nach Anspruch 1, **dadurch gekennzeichnet,** daß der Federlappen (3) mehrfach einwärts abgebogen ist und in seinem an der Karte (17) zur Anlage gelangenden und im Randbereich der Einführungsöffnung (18) angeordneten Bereich (10) ballig gestaltet ist.

## Claims

1. Card reader (12) having a carriage which is displaceable in a receptacle against spring force, accommodates the card (17), and carries springs for making contact with the chip, located on the card (17), and a device for switching on and off the reading and evaluating appliance, these two appliances being controlled by a slide which is arranged in the carriage perpendicularly to the insertion direction of the card (17) and is actuated by control surfaces arranged in the receptacle, and in which furthermore a spring element (1) is provided which bears against the card (17) and delays the ejection of the card (17) characterized in that the spring element (1) is fastened in a positively locking and force-fitting manner on the housing (11) of the card reader (12) in the area of an insertion opening (18) and projects with a spring tab (3), which comes to rest against the card (17) during the ejection process, into the insertion opening (18) for the card (17).

2. Card reader according to Claim 1, characterized in that the spring element (3) essentially comprises a fastening area (2), serving for connection to the housing (11) of the card reader (12), and an area (4) arranged perpendicularly thereto and carrying the spring tab (3).

3. Card reader according to Claim 2, characterized in that the fastening area (2) is formed by a web (5) which is cut free and two plug-in tabs (7) which are three-dimensionally separated by a slot (15) and angularly bent off from the plane of the fastening area (2), a latching hook (8) being provided between the plug-in tabs (7), which hook is cut free and is angled off a plurality of times.

4. Card reader according to Claim 1, characterized in that the housing (11) of the card reader (12) has a slot-like recess (13) for the fastening area (2) of the spring element (1), a housing web (14) projecting into the slot-like recess (13), which web engages in the slot (15), arranged between the web (5) and the [lacuna] the plug-in tabs (7) and the latching hooks (8), of the fastening area (2).

5. Card reader according to Claim 3, characterized in that the latching hook (8) engages under a wall (16) of the card reader (12).

6. Card reader according to Claims 2 and 3, characterized in that on the fastening area (2) a pushed-through region (9) is provided in alignment with the latching hook and the free ends of the plug-in tabs (7).

7. Card reader according to Claim 1, characterized in that the spring tab (3) is bent inwards a plurality of times and is designed to be ball-shaped in its area (10) which comes to rest against the card (17) and is arranged in the peripheral area of the insertion opening (18).

## Revendications

1. Lecteur de carte (12) comportant un curseur déplaçable dans son logement à l'encontre de la force d'un ressort et recevant la carte (17) et qui comporte des ressorts destinés à venir en contact avec la microplaquette située sur la carte (17), ainsi qu'un dispositif pour brancher et débrancher le dispositif de lecture et d'évaluation, la commande de ces deux dispositifs étant exécutée par un poussoir disposé perpendiculairement à la direction d'introduction de la carte (17) dans le curseur et qui est actionné par des surfaces de commande disposées dans le logement, et dans lequel en outre est prévu un élément élastique (1) qui s'applique contre la carte (17) et retarde l'éjection de la carte (17), caractérisé par le fait que l'élément de ressort (1) est fixé selon une liaison par formes complémentaires et selon une liaison de force au boîtier (11) du lecteur de carte (12) dans la zone d'une ouverture d'introduction (18) et pénètre par une languette élastique (3), venant s'appliquer contre la carte (17) lors d'une opération d'éjection, dans l'ouverture d'introduction (18) pour la carte (17).

2. Lecteur de carte suivant la revendication 1, caractérisé par le fait que l'élément de ressort (3) est constitué essentiellement par une partie de fixation (2) utilisée pour la liaison avec le boîtier (11) du lecteur de carte (12), et par une partie (4) perpendiculaire à la précédente et portant la languette élastique (3).

3. Lecteur de carte suivant la revendication 2, caractérisé par le fait que la partie de fixation (2) est formée par une barrette découpée (5) ainsi que par deux languettes enfichables (7) , qui sont séparées spatialement par une fente (15) et sont repliées en équerre à partir du plan de la partie de fixation (2), un crochet d'encliquetage (8) découpé et plusieurs fois coudé étant prévu entre les languettes à enfichage (7).

4. Lecteur de carte suivant la revendication 1, caractérisé par le fait que le boîtier (11) du lecteur de carte (12) possède un évidement en forme de fente (13) pour la partie de fixation de l'élément de ressort (1), auquel cas, dans l'évidement en forme de fente (13), pénètre une barrette (14) du boîtier, qui s'engage dans la fente (15) de la partie de fixation (2), qui est disposée entre la barrette (5) et les languettes d'enfichage (7) et le crochet d'encliquetage (8).

5. Lecteur de carte suivant la revendication 3, caractérisé par le fait que le crochet d'encliquetage (8) s'engage au-dessous d'une paroi (16) du lecteur de carte (12).

6. Lecteur de carte suivant les revendications 2 et 3, caractérisé par le fait qu'une partie en renfoncement (9) est prévue dans la partie de fixation (2) dans une position alignée avec le crochet d'encliquetage et les extrémités libres des languettes d'encliquetage (7).

7. Lecteur de carte suivant la revendication 1, caractérisé par le fait que la languette élastique (3) est repliée de façon multiple à l'intérieur et est agencée avec une forme bombée au niveau de sa partie (10), qui vient s'appliquer contre la carte (17) et est située dans la zone marginale de l'ouverture d'introduction (18).
